# EUROPEAN PATENT APPLICATION

(11) **EP 4 403 984 A1**
(43) Date of publication of application: **24.07.2024**
(21) Application number: 22869721.5
(22) Date of filing: 05.08.2022
(51) Int. Cl.: G02C 7/06

(54) **SPECTACLE LENS**

(30) Priority: 15.09.2021 JP 2021150385; 04.03.2022 JP 2022033290
(71) Applicant: Hoya Lens Thailand Ltd., Pathumthani 12130 (TH)
(72) Inventor: QI, Hua, Tokyo 160-8347 (JP)
(74) Representative: Betten & Resch
(86) International application number: PCT/JP2022/030172
(87) International publication number: WO 2023/042573

(57) **Abstract**

There is provided a spectacle lens and a related technique thereof, including: center clear areas, functional areas, and outer clear areas, wherein in planar view, the functional area falls within a circle centered on an eye point and having a diameter that is any one value of 15.00 to 25.00 mm.

## Description

### Technical Field

The present invention relates to a spectacle lens.

### Description of Related Art

As a spectacle lens that suppresses a progression of refractive error such a myopia, there is a lens that has multiple island-like areas formed thereon, having a refractive power more positive than a prescribed refractive power (for example, see Patent document 1).

According to the spectacle lens with this configuration, out of the light beams that enter from an object-side surface and exit from an eyeball-side surface, those that pass through areas other than defocus areas are focused on a wearer's retina, but the light beams that pass through the defocus areas are focused at a position in front of the retina. This will suppress the progression of myopia.

FIG. 1 of Patent document 1 illustrates a case where the island-shaped areas are not provided at and near a geometric center of a lens.

Patent documents 2 and 3 disclose spectacle lenses in which a predetermined configuration is provided at more outer edge side of the spectacle lens than at and near the geometric center of the spectacle lens in order to suppress the progression of myopic refractive error. The spectacle lenses described in Patent documents 2 and 3 do not have a configuration that exhibits an effect of suppressing the progression of myopia at and near the geometric center of the lens, in planar view (FIG. 1 of Patent document 2, FIG. 5A of Patent document 3).

Patent document 4 describes a spectacle lens including a base portion that allows light beams entering from an object-side surface to exit from an eyeball-side surface and converge at a position A on an eyeball's retina, and a defocus area that gives a positive or negative defocus to a transmitted light beam and has an effect of converging the light at a position different from the light transmitted through the base portion.

Paragraph 0102 of the Patent document 4 describes that a function of suppressing the progression of hyperopia is achieved by changing a base material of a spectacle lens from a convex portion to a concave portion. In an example of the spectacle lens described in Patent document 4 (FIG. 5 of Patent document 4), the lens does not have the configuration that exhibits the effect of suppressing the progression of myopia or the effect of reducing hyperopia at and near the geometric center of the lens, in planar view.

### Prior art document

### Patent document

[Patent Document 1] US Application Publication No. 2017/0131567
[Patent Document 2] International Publication No. WO2019/166657
[Patent Document 3] US Patent No. 10884264
[Patent Document 4] International Publication No. WO2020/045567

### Summary of the invention

### Problem to be solved by the invention

When the configuration of suppressing the progression of myopia (for example, island-like areas described in Patent document 1) is not provided at the center of the lens, as a matter of course, it is considered that the above-described effect of suppressing the progression of myopia cannot be obtained with a light beam that passes through an area not including the island-like area and enters a wearer's pupil. Instead, a prescribed power is realized in a clear area, resulting in good visibility.

In this specification, the area not having the configuration that suppresses the progression of myopia or reducing hyperopia is also referred to as a clear area. The clear area will be described later.

In planar view, in addition to the above-described island-like area, an area having a configuration that exhibits an effect of suppressing the progression of myopia or an effect of reducing hyperopia (such as a configuration in which a concave area and/or a convex area is formed on the surface of a spectacle lens or a different refractive index is embedded inside the spectacle lens, for example, like the spectacle lens described in Patent documents 2 to 4. In this specification, "retinal nonconvergence area") is also referred to as a functional area. The functional area will be discussed later.

In the conventional spectacle lens having the clear area and the functional area, as a matter of course, attention was paid to the effect of suppressing the progression of myopia or the effect of reducing hyperopia. On the other hand, the functional area does not provide better visibility than the clear area. The functional area contributes to peripheral vision imaging.

When a wearer is a child, he/she often turns his/her attention to his/her peripheral vision during outdoor activities. In other words, this means that it is difficult to obtain good visibility during outdoor activities when the wearer of the conventional spectacle lenses is a child. This means that the quality of daily life (QOL) of the wearer (especially child) is reduced.

One aspect of the present invention is to provide a technique that makes it easier to obtain good visibility even in a peripheral vision when wearing spectacle lenses with a clear area and a functional area.

### Means for solving the problem

A first aspect of the present invention provides a spectacle lens, including:
a central clear area that is an area including an eye point and allows a light beam entering from an object-side surface to exit from an eyeball-side surface, enter into a wearer's pupil, and converge on a retina;
a functional area that is an annular functional area surrounding the central clear area, and having a retinal non-convergence region that does not allow the light beam entering into the wearer's pupil to converge on the retina, while allowing the light beam entering from the object-side surface to exit from the eyeball-side surface; and
an outer clear area that is an annular area surrounding the functional area on an outer edge side of a spectacle lens, and allows the light beam entering from the object-side surface to exit from the eyeball-side surface, enter into the wearer's pupil, and converge on the retina,
wherein in planar view, the functional area falls within a circle centered on an eye point and having a diameter that is any one value of 15.00 to 25.00 mm.

A second aspect of the present invention provides a spectacle lens, including:
a central clear area that is an area including an eye point and allows a light beam entering from an object-side surface to exit from an eyeball-side surface, enter into a wearer's pupil, and converge on a retina;
a functional area that is an annular functional area surrounding the central clear area, and having a retinal non-convergence region that does not allow the light beam entering into the wearer's pupil to converge on the retina, while allowing the light beam entering from the object-side surface to exit from the eyeball-side surface; and
an outer clear area that is an annular area surrounding the functional area on an outer edge side of a spectacle lens, and allows the light beam entering from the object-side surface to exit from the eyeball-side surface, enter into the wearer's pupil, and converge on the retina,
wherein the functional area is provided at a position where the light beam enters into a defocus-sensitive area on a wearer's retina, in a range of rotation angles of any one of 10 to 20 degrees,
the outer clear area is provided at a position where the light beam enters in a range of rotation angles exceeding the above one value, and
the retinal non-convergence area is intensively provided within the functional area of an entire spectacle lens.

A third aspect of the present invention provides the spectacle lens according to the first or second aspect, wherein in planar view, an area of the retinal non-convergence area provided within the functional area relative to an area of the retinal non-convergence area in the entire spectacle lens, is 80% or more (preferably 85% or more, 90% or more, 95% or more, 98% or more, 99% or more).

A fourth aspect of the present invention provides the spectacle lens according to any one of the first to third aspects, wherein in planar view, an area of the retinal non-convergence area provided within the functional area is 20% or less (preferably 10% or less) of the area of the entire spectacle lens.

A fifth aspect of the present invention provides the spectacle lens according to any one of the first to fourth aspects, wherein in the functional area, 30% or more of the light beam entering into the wearer's pupil is not allowed to converge on the retina.

A sixth aspect of the present invention provides the spectacle lens according to any one of the first to fifth aspects, wherein in planar view, when the outer clear area is shaped as an aggregate of all circles with a radius r1 [mm] (r1 is any one value in a range of 1.50 or more and 2.50 or less), capable of circumscribing the retinal non-convergence area within the functional area without including other retinal non-convergence areas on the outer clear area side, the functional area falls within a circle centered on the eye point and having a diameter that is any one value of 15.00 to 25.00 mm (the one value is preferably 23.00mm, 22.00mm, 21.00mm, 20.00mm).

A seventh aspect of the present invention provides the spectacle lens according to any one of the first to sixth aspects, wherein in planar view, when the central clear area is shaped as an aggregate of all circles with a radius r2 [mm] (r2 is any one value in a range of 1.50 or more and 2.50 or less) and capable of circumscribing the retinal non-convergence area within the functional area without including other retinal non-convergence areas on the central clear area side, the central clear area has a size that includes a circle centered on the eye point and having a diameter that is any one value of 4.00 to 13.00 mm, and has a size that falls within a circle with a diameter of other one value within the above range.

An eighth aspect of the present invention provides the spectacle lens according to any one of the first to seventh aspects,
wherein in planar view, an area of the retinal non-convergence area provided in the functional area relative to an area of the retinal non-convergence area in the entire spectacle lens, is 80% or more (preferably 85% or more 90% or more, 95% or more, 98% or more, and 99% or more), and
in planar view, an area of the retinal non-convergence area provided in the functional area relative to an area of the entire spectacle lens, is 20 % or less (preferably 10% or less), and
in the functional area, 30 % or more of the light beam entering into the pupil of the wearer is not allowed to converge on the retina, and
in planar view, when the outer clear area is shaped as an aggregate of all circles with a radius r1 [mm] (r1 is any one value in the range of 1.50 or more and 2.50 or less) that can circumscribe the retinal non-convergence area in the functional area without including other retinal non-convergence areas on the outer clear area side, the functional area falls within a circle centered on the eye point and having a diameter that is any one value in a range of 15.0 or more 25.00 or less (preferably 23.00 mm, 22.00 mm, 21.00 mm, 20.00 mm), and
in planar view, when the central clear area is shaped as an aggregate of all circles with a radius r2 [mm] (r2 is any one value in a range of 1.50 or more and 2.50 or less) that can circumscribe the retinal non-convergence area in the functional area without including other retinal non-convergence areas on the outer clear area side, the central clear area has a size that includes a circle centered on the eye point and having a diameter that is any one value of 4.00 to 13.00 mm (preferably 6.30 mm to 7.50 mm), and has a size that falls within a circle with a diameter of other one value within the above range.

In another example, the central clear area 2 has a size that includes a circle centered on the eye point EP and having a diameter that is any one of 4.00 mm or more and less than 13.00 mm (preferably 6.30 mm or more and less than 7.50 mm), and has a size that falls within a circle having a diameter that is other one value larger than the above one value and exceeding 4.00 mm and 13.00 mm or less (preferably exceeding 6.30 mm and 7.50 mm or less).

Other aspects of the present invention that can be combined with the above aspects are as follows.

The central clear area (and the base area within the functional area, and further the outer clear area) of one embodiment of the present invention functions as a so-called single focus lens.

The aggregate may be read as an envelope surrounding the aggregate.

In planar view, the area (area ratio) of the retinal non-convergence area provided in the functional area relative to the area of the retinal non-convergence area in an entire spectacle lens is preferably 85% or more, 90% or more, 95% or more, 98% or more, and 99% or more in this order.

There is no limit in the size and shape of the central clear area, and the shape may be circular, rectangular, elliptical, etc. One guideline for a lower limit of the size of the central clear area is that it should be large enough to include a circle with a diameter of 4.00 mm centered on the eye point. One guideline for an upper limit of the size of the central clear area 2 is that it should fall within a circle with a diameter of 13.00 mm centered on the eye point.

One guideline is that in the functional area, it may be defined that 30% or more (or 40% or more, 50% or more, 60% or more) of the light beam entering into a wearer's pupil is not allowed to converge on the retina. The upper limit may be, for example, 70%.

In the functional area, the area of the retinal non-convergence area (convex area, embedding structure), which is a configuration that exhibits the effect of suppressing the progression of myopia or the effect of reducing hyperopia, may be defined as 20% or more and 80% or less of the entire functional area. The retinal non-convergence areas may be arranged sparsely toward the outer edge of the functional area.

In planar view, it is preferable that the area of the retinal non-convergence areas provided within the functional area relative to the area of the entire spectacle lens, is 20% or less (or 15% or less, 10% or less). A lower limit is 5% or more.

However, when considering that it is easier to obtain good visibility even in a peripheral vision, it is preferable that the configuration intended to provide an effect of suppressing the progression of myopia or an effect of reducing hyperopia (e.g. defocus areas, convex and/or concave areas, embedding structures, etc.) is not provided between the outer edge of the spectacle lens and the functional area. In other words, it is preferable that an entire area between the outer edge of the spectacle lens and the functional area is the outer clear area.

The technical idea of the present invention is also reflected in a pair of spectacle lenses in which one embodiment of the present invention is applied to each of a right-eye lens and a left-eye lens.

The technical idea of the present invention is also reflected in a spectacle lens fitted into a frame, with a portion near its peripheral edge cut to match a specified frame shape.

### Advantage of the invention

According to one aspect of the present invention, there is provided a technique that facilitates obtaining good visibility even in a peripheral vision when wearing spectacle lenses having clear areas and functional areas.

### Brief description of the drawings

FIG. 1 is a view illustrating a state in which a light beam passing through a central clear area and a light beam passing through a functional area of a spectacle lens according to one aspect of the present invention, enters into a defocus sensitive area.
FIG. 2 is a schematic plan view of <Specific example 1> of a spectacle lens according to one aspect of the present invention.
FIG. 3 is a schematic plan view of <Specific example 2> of a spectacle lens according to one aspect of the present invention.
FIG. 4 is a schematic plan view of <Specific example 3> of a spectacle lens according to one aspect of the present invention.
FIG. 5 is a schematic plan view of <Specific example 4> of a spectacle lens according to one aspect of the present invention.

### Detailed description of the invention

Embodiments of the present invention will be described below. The following description based on the drawings is an example, and the present invention is not limited to the illustrated embodiments.

The spectacle lens described in this specification has an object-side surface and an eyeball-side surface. The "object-side surface" is the surface located on an object side when spectacles equipped with spectacle lenses are worn by a wearer, and the "eyeball side surface" is the opposite thereof, that is, the surface located on an eyeball side when spectacles with spectacle lenses are worn by a wearer. This relationship also applies to a lens base material that is the basis of a spectacle lens. In other words, the lens base material also has the object-side surface and the eyeball-side surface.

In this specification, when wearing the spectacle lens, a horizontal direction is X direction, a vertical (up and down) direction is Y direction, and a thickness direction of the spectacle lens and perpendicular to the X and Y directions is Z direction. Z direction is also an optical axis direction of the spectacle lens. The origin is at the center of the lens. The center of the lens refers to an optical center or a geometric center of the spectacle lens. This specification shows a case where the optical center and the geometric center substantially coincide with each other.

Facing the wearer, the right side is +X direction, the left side is -X direction, the top is +Y direction, the bottom is -Y direction, the object side is +Z direction, and the opposite direction (backward direction) is -Z direction. In this specification, "planar view" refers to a state when viewed from the +Z direction to the -Z direction.

Each figure of the present application illustrates a case where a right eye lens is viewed from above, and when the right eye lens is worn, a nasal side direction is the +X direction, and an ear side direction is the -X direction.

When the functional area is provided only on an eyeball-side outermost surface, a viewing state from the -Z direction to the +Z direction may be regarded as the planar view. Hereinafter, when discussing "positions" such as an eye point and a geometric center of a spectacle lens, unless otherwise specified, it refers to the position in planar view.

In this specification, "...to..." refers to a value greater than or equal to a predetermined value and less than or equal to a predetermined value.

### <Spectacle lens>

A spectacle lens according to one aspect of the present invention includes a central clear area and a functional area.

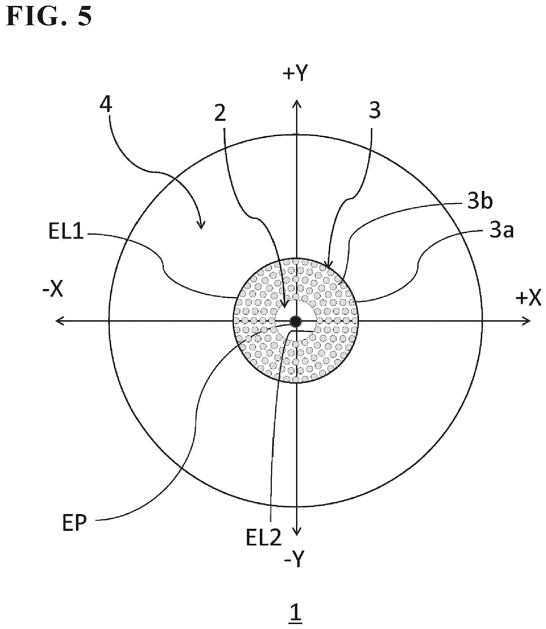

The central clear area is a portion having a smooth surface shape that can realize a prescribed refractive power of the wearer from a geometrical optics perspective, and for example, it is a transparent portion in a visible light wavelength range. The central clear area is a portion corresponding to a first refraction area of Patent document 1, and this is the area provided as a base area at and near a lens center of the spectacle lens illustrated in FIG. 5 of Patent document 4. Further, the central clear area is the area including a center of the lens and/or an eye point, and this is an area where the light beam entering from the object-side surface is allowed to exit from the eyeball-side surface, enter into the wearer's pupil, and converge on the retina.

The prescribed refractive power (spherical power, astigmatic power, astigmatic axis, etc.) can be achieved by the central clear area of one embodiment of the present invention. This spherical power may be a power that should be corrected when viewed with a front vision (a distance to an object is about infinity to 1m) (for example, it is a distance vision power, and hereafter, distance vision power will be exemplified.), or may be a power that should be corrected when viewed with an intermediate vision (1m to 40cm) or a near vision (40cm to 10cm).

Further, the central clear area does not have any configuration (eg, defocus area, convex area and/or concave area, embedding structure, etc.) intended to exhibit the effect of suppressing the progression of myopia or the effect of reducing hyperopia.

The central clear area (and the base area within the functional area, and further the outer clear area) of one embodiment of the present invention functions as a so-called single focus lens.

Prescription data of wearer's information is written on a lens bag of the spectacle lens. In other words, with this lens bag, the lens can be identified as a spectacle lens based on the prescription data of the wearer's information, and usually, the spectacle lens comes in a set with the lens bag. Therefore, the technical idea of the present invention is reflected in the spectacle lens with the lens bag attached thereto, and the same applies to the set of the lens bag and the spectacle lens.

"Eye point (EP)" is, for example, the position where a line of sight passes when facing straight ahead when wearing the spectacle lenses, and an example of this will be given below. The eyepoint may be a position through which the wearer's line of sight passes when he or she visually recognizes an object close to the wearer (so to speak, during near vision), that is, a near vision eyepoint. One aspect of the present invention shows a case in which the geometric center of the spectacle lens before being fitted into a frame coincides with the eye point and also coincides with a prism reference point, and also coincides with the center of the lens. Hereinafter, as an example of the spectacle lens according to one embodiment of the present invention, a spectacle lens before being fitted into a frame will be exemplified, but the present invention is not limited to this embodiment.

The position of the eyepoint can be specified by referring to a remark chart or a centration chart issued by a lens manufacturer.

The functional area is an area in which the light beam entering from the object-side surface is allowed to exit from the eyeball-side surface, while at least a part of the light beam entering into the wearer's pupil is not allowed to converge on the retina. The functional area is an annular area adjacent to and surrounding the central clear area in planar view.

An entire annular functional area does not necessarily have a surface shape of the spectacle lens (such as an opaque one that has been treated like frosted glass) which is different from the shape of the central clear area, or does not necessarily have an internal embedding structure. For example, when providing a first refractive area (a base area that performs the same function as the central clear area) that achieves a prescribed refractive power around the convex area, while providing the convex area in an island shape as seen in the second refractive area of Patent document 1, an annular area including the base area and the convex area may be regarded as a functional area.

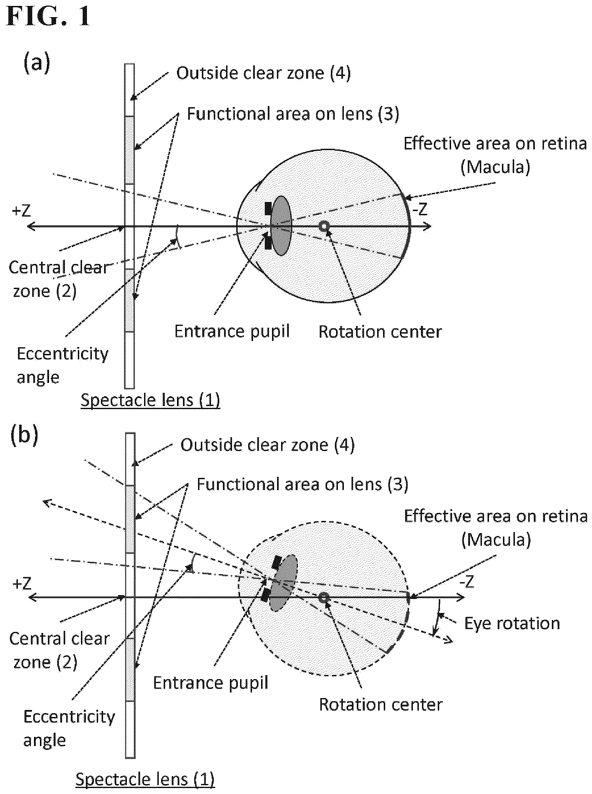

Further, as illustrated in FIG. 1 of Patent document 2, Patent document 2 shows a spectacle lens including a convex area formed in a ring shape in a beaded pattern in such a manner that a plurality of the convex areas are arranged in a radial direction, with an area where no convex area is formed being used as a base area. In this spectacle lens, the area between the ring of the beaded pattern with a smallest diameter and the ring of the beaded pattern with a largest diameter may be set as a functional area.

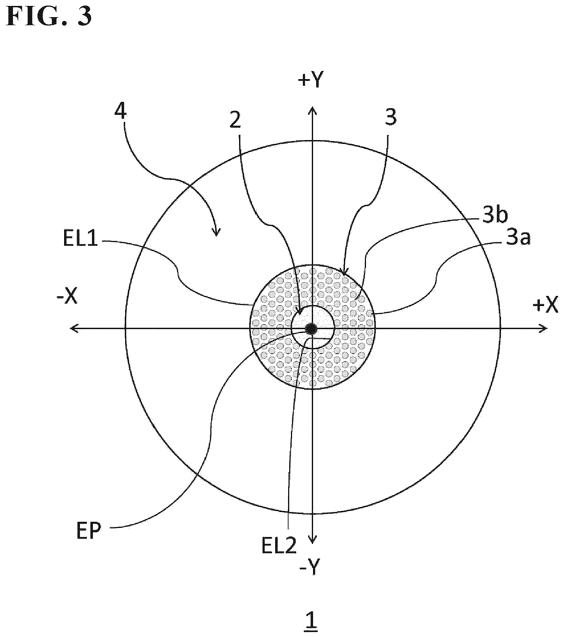

Further, regarding the functional area, as illustrated in FIG. 3B of Patent document 3, the functional area may be set as an area as an annular area between a portion closest to the eye point and a portion furthest from the eye point EP, when materials with different refractive indexes are embedded inside the spectacle lens.

The area where the light beam entering into the wearer's pupil is not converged on the retina is also called a retinal non-convergence area. The areas other than the base area in the functional area are retinal non-convergence areas.

One aspect of the present invention includes an annular outer clear area adjacent to and surrounding the functional area on the outer edge side of the spectacle lens. The outer clear area allows the light beam entering from the object-side surface to exit from the eyeball-side surface, to enter into the wearer's pupil, and converge on the retina. In other words, the functional area is an annular area that exists between the outer clear area and the central clear area.

### (Finding leading up to the present invention)

FIG. 1 is a schematic side view illustrating a state in which the light beam passing through the central clear area 2 and the light beam passing through the functional area 3 of the spectacle lens 1 according to one aspect of the present invention, enter into a defocus sensitive area.

The defocus area disclosed in Patent document 4 provides a defocus stimulus on the retina. Utilizing this principle, the spectacle lens disclosed in Patent document 4 provides the effect of suppressing the progression of myopia or the effect of reducing hyperopia.

An effective range of the defocus stimulus on the retina is limited. According to one theory, this range is also called a macular range (Eccentricity angle = 9.2 degrees) (the Z-axis on the retina and a thick line therearound in FIG. 1(a)). The functional area 3 covers a range where the defocus stimulus on the retina is effective, and needs to have a size that covers a certain degree of rotation angle in consideration of an eye rotation (FIG. 1(b)).

As described in the section of the problem of the present invention, when the wearer of the conventional spectacle lens 1 is a child, this means that it is difficult to obtain good visibility in the peripheral vision during outdoor activities. This means that the quality of daily life (QOL) of the wearer (especially children) is reduced.

In order to improve the quality of a daily life described above, it is conceivable to design the outer clear area 4 to be large and to design the functional area 3 to be correspondingly small. However, when the functional area 3 is designed small, naturally, the effect of suppressing the progression of myopia or the effect of reducing hyperopia may be reduced.

There is a sensitive area near the macula on the retina that responds sensitively to the defocus stimulus to the retina and affects eyeball growth. This range is defined as the defocus sensitive area. On the other hand, it is found that areas outside the defocus sensitive area do not respond much to the defocus stimulus.

The inventor paid attention to this point, and as shown in FIG. 1, it is found that even in the defocus sensitive area, entering of the light beam that has passed through the functional area 3 enables to obtain the effect of suppressing the progression of myopia or the effect of reducing hyperopia. In other words, the present inventor found that the light beam that enters the area other than the defocus sensitive area may be a light beam that passes through the base area 3b.

Based on the finding, the present inventor found that the outer clear area 4 is arranged as close to the eye point EP as possible, while providing the outer clear area 4 on the outer edge side of the functional area 3. In addition, the present inventor conceived of a configuration in which the retinal non-convergence area 3a is intensively provided within the functional area 3 of an entire spectacle lens 1.

### (Configuration regarding the finding)

As used herein, the "defocus sensitive area" is a range equal to or lower than a value of the eccentricity angles between 5 and 15 degrees of an eyeball, and is the area surrounding a macula on the retina of a wearer.

The functional area 3 is provided on the spectacle lens 1, which sets a maximum angle of an eyeball rotation and covers the "retinal defocus sensitive area" even in a rotated state. Then, the outer clear area 4 is provided at a position where the light beam enters into a range of rotation angles exceeding the above-described one value.

The spectacle lens always has a hidden mark so that a wearer can determine a position on the spectacle lens through which the line of sight passes in front view. Therefore, the wearer's line of sight in front view from the lens can be specified. Therefore, the radius when the center is set as a point on the lens through which the line of sight passes in front view, can be expressed as the rotation angle. Further, the rotation angle of the eye and a corresponding positional relationship on the spectacle lens are described in, for example, Japanese Patent No. 2131365 and Japanese Patent Application Laid-Open No. 2016-26324.

When the maximum angle of eyeball rotation is set to any one value of 10 to 20 degrees, and the maximum visual angle (eccentricity angle) of the defocus sensitive area is set to any one value of 5 to 15 degrees, a specific example of an approximate correspondence between the above values and the dimensions of the spectacle lens 1 in planar view, is shown in the following manner. "In one aspect of the present invention, in planar view, the functional area 3 falls within a circle centered on the eye point EP and having a diameter that is any one value of 15.00 to 25.00 mm."

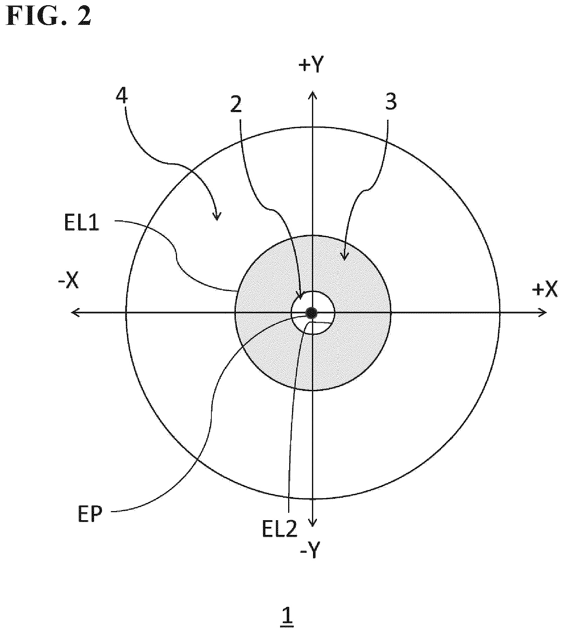

Namely, as shown in FIGS. 2 to 5 related to <Specific example 1> to <Specific Example 4> below, the functional area 3 is enclosed in a circle centered on the eye point EP and having a diameter of 25.00 mm at most. In other words, the diameter of a circumscribed circle of the functional area 3 may be any one value of 15.00 to 25.00 mm. Then, the outer clear area 4 is arranged on the outer edge side of the functional area 3.

According to one aspect of the present invention, when wearing the spectacle lens 1 having the clear area and the functional area 3, even when paying attention to a peripheral vision, the distance from the eyepoint EP in the functional area 3 is not larger than before, and the outer clear area 4 is arranged on the outer edge side of the functional area 3. As a result, it becomes easier to obtain good visibility even when paying attention to the peripheral vision.

### <Preferable examples and modified examples of the spectacle lens 1>

Preferable examples and modified examples of the spectacle lens 1 according to one aspect of the present invention will be described below.

In planar view, the area of the retinal non-convergence area 3a provided in the functional area 3 relative to the area of the retinal non-convergence area 3a in the entire spectacle lens 1 (area ratio) is preferably 80% or more. This definition is also a specific example of "a configuration in which the retinal non-convergence region 3a is provided intensively within the functional region 3 of the entire spectacle lens 1". The area ratio is preferably in an order of 85% or more, 90% or more, 95% or more, 98% or more, and 99% or more.

The shape of the outer edge side of the functional area 3 (that is, the shape of the functional area 3 side in the outer clear area 4 and a boundary between the two) is preferably defined in the following manner.

In planar view, an envelope EL1 surrounding an aggregate of all circles with a radius r1 [mm] (r1 is any one value in the range of 1.5 or more and 2.50 or less) (all having the same radius) that can circumscribe the retinal non-convergence area 3a on the outer clear area 4 side within the functional area 3 without including the other retinal non-convergence area 3a, may be used as a boundary line between the functional area 3 and the outer clear area 4 (definition of the outer edge side of the functional area 3). Since the value of r1×2 (and r2×2 described below) is assumed to be a pupil diameter, each of these circles is also referred to as a clear pupil circle in this specification. Hereinafter, an envelope will be shown as an example, but the outer clear area 4 may be shaped as the "aggregate of clear pupil circles" instead of the envelope surrounding the aggregate of clear pupil circles. Namely, the outer clear area 4 may include the eye point EP and comprise the aggregate of clear pupil circles. Then, in the spectacle lens 1, an area other than the central clear area 2 and the outer clear area 4 may be defined as the functional area 3.

As described above, it is preferable that the functional area 3 falls within a circle centered on the eye point EP and having a diameter that is any one value of 15.00 to 25.00 mm. The one value is preferably 23.00mm, 22.00mm, 21.00mm, 20.00mm. For example, it is preferable that the functional area 3 falls within a circle centered on the eye point EP and having a diameter of 22.00 mm. Although it is repeated, when this configuration is adopted, even in the peripheral vision, the distance from eyepoint EP in functional area 3 is not larger than before, and the outer clear area 4 is arranged on the outer edge side of the functional area 3. As a result, it becomes easier to obtain good visibility in the peripheral vision.

The shape of the center side of the functional area 3 (that is, the shape of the central clear area 2) is preferably defined in the following manner.

In planar view, when the envelope EL2 surrounding the aggregate of all circles (all having the same radius) with a radius r2 [mm] (r2 is any one value in a range of 1.50 or more and 2.50 or less) that can circumscribe the retinal non-convergence area 3a in the functional area 3 without including the other retinal non-convergence area 3a, is defined as the boundary line between the functional area 3 and the central clear area 2, it is preferable that the central clear area 2 has a size that includes a circle centered on the eye point EP and having a diameter of 4.00 mm or more and less than 13.00 mm (preferably 6.30 mm or more and less than 7.50 mm), and has a size of falling within a circle with a diameter of another value larger than the above one value and exceeding 4.00 mm and 13.00 mm or less (preferably exceeding 6.30 mm and 7.50 mm or less) (definition of the center side of the functional area 3). The central clear area 1 may be shaped as the "aggregate of clear pupil circles" instead of the envelope surrounding the aggregate of clear pupil circles. Namely, the central clear area 2 may include the eye point EP and may comprise the aggregate of clear pupil circles. As an example of dimensions, the diameters of both the inscribed circle and circumscribed circle of the central clear area 2 fall within a range of 4.00 to 13.00 mm. It is preferable that the central clear area 2 has such a size.

There is no limit to the size and shape of the central clear area 2, and the shape may be circular, rectangular, elliptical, etc. One guideline for the lower limit of the size of the central clear area 2 is that it should be large enough to include a circle with a diameter of 4.00 mm centered on the eye point EP. One guideline for the upper limit of the size of the central clear area 2 is that it should be within a circle with a diameter of 13.00 mm centered on the eye point EP.

When the configuration described in the above paragraph is adopted, sufficiently good visibility can be obtained in a front vision.

In this example, as shown in Patent document 1, the annular functional area 3 comprises a plurality of convex areas 3a (i.e. retinal non-convergence areas 3a) on a base area 3b having the same shape as the central clear area 2 or the outer clear area 4. On the other hand, the present invention is not limited to this embodiment. For example, annular areas having a surface shape of an opaque one that has been treated like frosted glass or having an internal embedding structure, may be considered as the functional area 3.

One guideline is that in the functional area 3, it may be defined that 30% or more (or 40% or more, 50% or more, or 60% or more) of the light beam entering into the wearer's pupil is not allowed to converge on the retina. With a large value of the percentage, it is expected that the effect of suppressing the progression of myopia or the effect of reducing hyperopia will be large, but the visibility will be reduced. The value of the percentage may be appropriately determined in consideration of the effect of suppressing the progression of myopia or the effect of reducing hyperopia and visibility. An upper limit may be, for example, 70%.

In the functional area 3, the area of the retinal non-convergence area 3a (convex area 3a, embedding structure) having a configuration that exhibits the effect of suppressing the progression of myopia or the effect of reducing hyperopia in planar view, may be defined as 20% or more and 80% or less of an entire functional area 3. The retinal non-convergence areas 3a may be arranged sparsely toward an outer edge of the functional area 3.

In planar view, the area of the retinal non-convergence area 3a provided within the functional area 3 relative to the area of an entire spectacle lens 1, is preferably 20% or less (or 15% or less, 10% or less). A lower limit is 5% or more.

The shape of the functional area 3 is not limited, and may be annular in planar view. The ring may be circular, rectangular, elliptical, etc., on the inside (i.e. a boundary between the central clear area 2 and the functional area 3) and/or outside (i.e. a boundary between the outer clear area 4 and the functional area 3), or a combination thereof.

The spectacle lens 1 according to one embodiment of the present invention may be the spectacle lens 1 after being fitted into a frame, and a part of the functional area 3 of the spectacle lens 1 may be in contact with the outer edge of the spectacle lens 1, and another part of the functional area 3 may be in contact with the outer clear area 4. Further, it is acceptable to provide the retinal non-convergence area 3a further on the outer edge side of the outer clear area 4.

However, when considering that it is easier to obtain good visibility even in a peripheral vision, preferably, there is no configuration that is intended to provide an effect of suppressing the progression of myopia or an effect of reducing hyperopia (example: defocused area, convex area 3a and/or concave area, embedding structure, etc.) provided between the outer edge of the spectacle lens 1 and the functional area 3. That is, it is preferable that an entire area between the outer edge of the spectacle lens 1 and the functional area 3 is the outer clear area 4.

A characteristic aspect of the present invention is that the retinal non-convergence region 3a is provided intensively within the functional region 3 of the entire spectacle lens 1. In other words, preferably, the retinal non-convergence area 3a is not provided in the outer clear area 4 on the outer edge side of the functional area 3 (preferably between the outer edge of the functional area 3 and the outer edge of the spectacle lens 1).

### <One specific example of the spectacle lens 1>

The manner of arranging the defocus areas is not particularly limited, and can be determined from the viewpoints of external visibility of the defocus area, design enhancement by the defocus area, refractive power adjustment by the defocus area, etc., for example. The defocus area is an example of the retinal non-convergence area, in which the light beam is allowed to converge on the front side (+Z direction side) of the retina while being not allowed to converge on the retina.

In the functional area 3 arranged around the central clear area 2 of the spectacle lens 1, approximately circular defocus areas may be arranged in the form of islands (that is, not adjacent to each other but spaced apart) at equal intervals in a circumferential direction and a radial direction. As an example of the arrangement of the defocus areas in planar view, the convex areas 3a are arranged independently and sparsely such that the center of each convex area 3a becomes the vertex of an equilateral triangle (the center of each defocus area is placed at the vertex of a honeycomb structure: hexagonal arrangement). In this case, the distance between the defocus areas may be 1.0 to 2.0 mm. Further, the number of defocus areas (and eventually the retinal non-convergence areas) may be 10 to 200.

In the functional area 3, the defocus area is an example of the configuration (retinal non-convergence area) that exhibits the effect of suppressing the progression of myopia or the effect of reducing hyperopia.

The defocus area is the area in which at least a part of the area does not allow light to be focused at a position where the light should be focused by the base area 3b, from a geometrical optics perspective. The defocus area is a portion corresponding to a minute convex portion of Patent document 1. The spectacle lens 1 according to one aspect of the present invention is a myopia progression suppressing lens, similar to the spectacle lens described in Patent document 1. Similar to the minute convex portion of Patent document 1, the plurality of defocus areas according to one aspect of the present invention may be formed on at least one of the object-side surface and the eyeball-side surface of the spectacle lens 1. This specification mainly shows a case where a plurality of defocus areas are provided only on the obj ect-side surface of the spectacle lens 1. Hereinafter, unless otherwise specified, the case where the defocus area has a curved shape protruding toward the outside of the lens will be shown as an example.

It is preferable that half or more of the plurality of defocus areas (all defocus areas in the functional area) are arranged at the same period in planar view. An example of a pattern of the same period is an equilateral triangular arrangement (the center of the defocus area is placed at the vertex of an equilateral triangle net; hexagonal arrangement is also acceptable) in planar view. The direction of the period may be a circumferential direction and/or a radial direction, and the percentage of the defocus areas is preferably 80% or more, more preferably 90% or more, even more preferably 95% or more. Hereinafter, preferable examples of "the number of half or more (or 80% or more) of all defocus areas in the functional area" will be 80% or more, 90% or more, and 95% or more in an order of preference as described above, and repeated descriptions will be omitted.

The defocus area may have a spherical shape, an aspherical shape, a toric surface shape, or a mixture thereof (for example, a central location of each defocus area has a spherical shape, and a peripheral location outside the central location has an aspherical shape). A boundary between the central location and the peripheral location may be provided at 1/3 to 2/3 of a radius of the defocus area (or convex area 3a) in planar view. However, it is preferable that at least the central location of the defocus area (or convex area 3a) has a convex curved shape that protrudes toward the outside of the lens. Further, since it is preferable that half or more of the plurality of defocus areas (all defocus areas in the functional area) be arranged at the same period in planar view, the defocus areas are preferably spherical.

Each defocus area is configured as follows, for example. A diameter of the defocus area in planar view is preferably about 0.6 to 2.0 mm. A surface area of each may be approximately 0.50 to 3.14 mm². The convex area 3a has a spherical radius of curvature of 50 to 250 mm, preferably approximately 86 mm.

There is no limit to a specific value of a defocus power in each defocus area, but for example, it is preferable that a minimum value of the defocus power provided by the defocus area on the spectacle lens 1 is within a range of 0.50 to 4.50D, and a maximum value thereof is within a range of 3.00 to 10.00D. Preferably, a difference between the maximum value and the minimum value is within a range of 1.00 to 5.00D.

"Defocus power" refers to a difference between a refractive power of each defocus area and a refractive power of a portion other than each defocus area. In other words, the "defocus power" is a difference obtained by subtracting the refractive power of the base portion from an average value of the minimum refractive power and maximum refractive power at a predetermined location in the defocus area. For example, this specification shows a case where the defocus area is the convex area 3a.

The "refractive power" in this specification refers to an average refractive power that is an average value of the refractive power in a direction where the refractive power is minimum and the refractive power in a direction where the refractive power is maximum (perpendicular to the direction where the refractive power is minimum).

A lens base material comprises thermosetting resin material such as thiourethane, allyl, acrylic, or epithio. As the resin material of the lens base material, other resin material that provides a desired degree of refraction may be selected. Further, the lens base material may comprise inorganic glass instead of the resin material.

A hard coat film is formed using, for example, a thermoplastic resin or a UV curable resin. The hard coat film can be formed by immersing the lens base material in a hard coat liquid, or using spin coating, or the like. By coating with such a hard coat film, the durability of the spectacle lens 1 can be improved.

An antireflection film is formed by, for example, depositing an antireflection agent such as ZrO₂ MgF₂, Al₂O₃, etc., by vacuum deposition. By coating with such an antireflection film, improvement of the visibility of the image transmitted through the spectacle lens 1 is achieved.

As described above, a plurality of defocus areas are formed on the object-side surface of the lens base material. Accordingly, when that surface is coated with a hard coat film and an anti-reflection film, a plurality of defocus areas are formed by the hard coat film and the antireflection film, following the defocus areas in the lens base material.

In manufacturing the spectacle lens 1, first, the lens base material is molded by a known molding method such as cast polymerization. For example, by performing molding by cast polymerization using a mold having a molding surface with a plurality of recesses, a lens base material having defocus areas on at least one surface can be obtained.

Then, once the lens base material is obtained, the hard coat film is then formed on the surface of the lens base material. The hard coat film can be formed by immersing the lens base material in a hard coat liquid, or using spin coating, or the like.

After forming the hard coat film, the antireflection film is further formed on the surface of the hard coat film. The antireflection film can be formed by depositing a raw material for the film by vacuum evaporation.

By the manufacturing method with such a procedure, the spectacle lens 1 having a plurality of defocus areas on the object-side surface in such a manner as protruding toward the object side, can be obtained.

The thickness of the film coating through the above procedure may be, for example, in a range of 0.1 to 100 µm (preferably 0.5 to 5.0 µm, more preferably 1.0 to 3.0 µm). However, the thickness of the film coating is determined depending on a function required of the film coating, and is not limited to the above range.

One or more layers can also be formed on the film coating. Examples of such film coatings include various coatings such as an antireflection coating, water-repellent or hydrophilic antifouling coating, and antifogging coating. Known techniques can be applied to the method of forming these coatings.

### <Spectacles>

A technical idea of the present invention is also reflected in spectacles fitted into a frame, with the vicinity of the periphery of the spectacle lens 1 cut. There are no limits to the type or shape of the frame, and the frame may be full rim, half rim, under rim, or rimless.

Hereinafter, a specific example of the spectacle lens 1 according to one aspect of the present invention will be shown. The present invention is not limited to the following specific examples.

FIG. 2 is a schematic plan view of <Specific example 1> of a spectacle lens according to one aspect of the present invention.

The following spectacle lens 1 was produced. The spectacle lens 1 consists of only a lens base material, and no other material is laminated to the lens base material. As the prescribed refractive power, S (spherical refractive power) was set to 0.00D, and C (astigmatic refractive power) was set to 0.00D.
- Diameter of the lens base material in planar view: 60.00mm
- Type of the lens base material: PC (polycarbonate)
- Refractive index of the lens base material: 1.589

Since the above content is common to each specific example, the description thereof will be omitted hereafter.

In this specific example, regarding the central clear area 1, the functional area 3, and the outer clear area 4 before applying one embodiment of the present invention, the range of the central clear area 2 was set as a circular area with a radius of 3.50 mm from the eye point EP, and the range of the functional area 3 was set as a circle with a radius of 12.50 mm from the lens center (excluding the central clear area 2), and the outer clear area 4 was provided closer to the outer edge of the spectacle lens 1 than the functional area 3. An entire area between the outer edge of the spectacle lens 1 and the functional area 3 is an outer clear area 4 (the same applies to each of the following specific examples).

The functional area 3 of this specific example is assumed to have been subjected to an opaque process such as frosted glass over an entire functional area 3. On the other hand, the functional area 3 may be an annular area including a base area 3b and having a configuration intended to provide an effect of suppressing the progression of myopia or the effect of reducing hyperopia (example: defocus area, convex area 3a and/or concave area, embedding structure, etc.).

### <Specific example 2>

FIG. 3 is a schematic plan view of <Specific example 2> of a spectacle lens according to one aspect of the present invention.

In this specific example, the following configuration was adopted.
C onfiguration of functional area 3: Convex area 3a are discretely arranged as defocus areas.

In the functional area 3, the area other than the convex area 3a is the base area 3b.
- Shape of convex area 3a: spherical
- Refractive power of convex area 3a: 3.50D
- Surface on which convex area 3a is formed: object side surface
- Arrangement of the convex areas 3a in planar view: each convex area 3a is independently and discretely arranged so that the center thereof is the vertex of an equilateral triangle (the center of each convex area 3a is arranged at the vertex of a honeycomb structure)
- Shape of convex area 3a in planar view: perfect circle (diameter 1.00 mm)
- Pitch between each convex area 3a (distance between the centers of convex areas 3a): 1.50 mm
- Pupil diameter of wearer: assumed to be 4.00mm

In this specific example, regarding the central clear area 2 and the functional area 3 before applying one embodiment of the present invention, the range of the central clear area 2 was set as a circular area with a radius of 3.45 mm from the eye point EP, and the range of the functional area 3 was set within a circle with a radius of 10.00 mm from the center of the lens (excluding the central clear area 2).

### <Specific example 3>

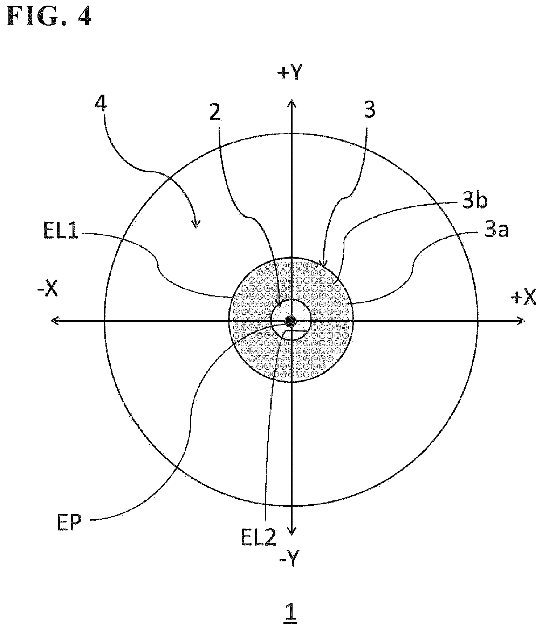

FIG. 4 is a schematic plan view of <Specific example 3> of a spectacle lens according to one aspect of the present invention.

In this specific example, the following changes were made to the specific example 2.

The arrangement of the convex area 3a in planar view was changed. Specifically, the convex areas 3a were aligned in horizontal and vertical directions. The pitch between the convex areas 3a (the distance between the centers of the convex areas 3a) was set to 1.25 mm.

In this specific example, regarding the central clear area 2 and the functional area 3 before applying one embodiment of the present invention, the range of the central clear area 2 was set as a circular area with a radius of 3.25 mm from the eye point EP, and the range of the functional area 3 was set as a circle with a radius of 10.00 mm from the center of the lens (excluding the central clear area 2).

### <Specific example 4>

FIG. 5 is a schematic plan view of <Specific example 4> of a spectacle lens according to one aspect of the present invention.

In this specific example, the following changes were made to the specific example 2.

The arrangement of the convex area 3a in planar view was changed. Specifically, the convex areas 3a were aligned in the circumferential direction. This alignment was made for each diameter (for each distance from the eyepoint EP). An alignment status is shown in the table below. In the table below, the ring number is a number assigned to a circumferentially aligned group of the convex areas 3a in an order of closest to the eye point EP, and a radius is a radius of the ring, and the number of convex areas 3a is the number of convex areas 3a arranged on the ring.

**[Table 1]**

| **Ring number** | **Radius (mm)** | **The number of convex areas** |
|---|---|---|
| 1 | 3.84 | 16 |
| 2 | 5.27 | 22 |
| 3 | 6.70 | 28 |
| 4 | 8.13 | 34 |
| 5 | 9.56 | 40 |

In this specific example, regarding the central clear area2 and the functional area 3 before applying one embodiment of the present invention, the range of the central clear area 2 was set as a circular area with a radius of 3.35 mm from the eye point EP, and the range of the functional area 3 was set as a circle with a radius of 10.06 mm from the center of the lens (excluding the central clear area 2).

The technical scope of the present invention is not limited to the above-described embodiments, but also includes various modifications and improvements within the scope of deriving specific effects obtained by the constituent elements of the invention and their combinations.

### Description of signs and numerals

- 1: Spectacle lens
- 2: Central clear area
- 3: Functional area
- 3a: Retinal non-convergence area (convex area)
- 3b: Base area
- 4: Outer clear area
- EP: Eye point
- GC: Geometric center
- EL1: Envelope (shaped as a boundary between the outer clear area and the functional area)
- EL2: Envelope (shaped as the central clear area)

## Claims

1. A spectacle lens, comprising:
a central clear area that is an area including an eye point and allows a light beam entering from an object-side surface to exit from an eyeball-side surface, enter into a wearer's pupil, and converge on a retina;
a functional area that is an annular functional area surrounding the central clear area, and having a retinal non-convergence region that does not allow the light beam entering into the wearer's pupil to converge on the retina, while allowing the light beam entering from the object-side surface to exit from the eyeball-side surface; and
an outer clear area that is an annular area surrounding the functional area on an outer edge side of a spectacle lens, and allows the light beam entering from the object-side surface to exit from the eyeball-side surface, enter into the wearer's pupil, and converge on the retina,
wherein in planar view, the functional area falls within a circle centered on an eye point and having a diameter that is any one value of 15.00 to 25.00 mm.

2. A spectacle lens, comprising:
a central clear area that is an area including an eye point and allows a light beam entering from an object-side surface to exit from an eyeball-side surface, enter into a wearer's pupil, and converge on a retina;
a functional area that is an annular functional area surrounding the central clear area, and having a retinal non-convergence region that does not allow the light beam entering into the wearer's pupil to converge on the retina, while allowing the light beam entering from the object-side surface to exit from the eyeball-side surface; and
an outer clear area that is an annular area surrounding the functional area on an outer edge side of a spectacle lens, and allows the light beam entering from the object-side surface to exit from the eyeball-side surface, enter into the wearer's pupil, and converge on the retina,
wherein the functional area is provided at a position where the light beam enters into a defocus-sensitive area on a wearer's retina, in a range of rotation angles of any one of 10 to 20 degrees,
the outer clear area is provided at a position where the light beam enters in a range of rotation angles exceeding the above one value, and
the retinal non-convergence area is intensively provided within the functional area of an entire spectacle lens.

3. The spectacle lens according to claim 1 or 2, wherein in planar view, an area of the retinal non-convergence area provided within the functional area relative to an area of the retinal non-convergence area in the entire spectacle lens, is 80% or more.

4. The spectacle lens according to any one of claims 1 to 3, wherein in planar view, an area of the retinal non-convergence area provided within the functional area relative to an area of an entire spectacle lens, is 20% or less.

5. The spectacle lens according to any one of claims 1 to 4, wherein in the functional area, 30% or more of the light beam entering into the wearer's pupil is not allowed to converge on the retina.

6. The spectacle lens according to any one of claims 1 to 5, wherein in planar view, when the outer clear area is shaped as an aggregate of all circles with a radius r1 [mm] (r1 is any one value in a range of 1.50 or more and 2.50 or less), capable of circumscribing the retinal non-convergence area within the functional area without including other retinal non-convergence areas on the outer clear area side, the functional area falls within a circle centered on the eye point and having a diameter that is any one value of 15.00 to 25.00 mm.

7. The spectacle lens according to any one of claims 1 to 6, wherein in planar view, when the central clear area is shaped as an aggregate of all circles with a radius r2 [mm] (r2 is any one value in a range of 1.50 or more and 2.50 or less) and capable of circumscribing the retinal non-convergence area within the functional area without including other retinal non-convergence areas on the central clear area side, the central clear area has a size that includes a circle centered on the eye point and having a diameter that is any one value of 4.00 to 13.00 mm, and has a size that falls within a circle with a diameter of other one value within the above range.

8. The spectacle lens according to any one of claims 1 to 7,
wherein in planar view, an area of the retinal non-convergence area provided in the functional area relative to an area of the retinal non-convergence area in the entire spectacle lens, is 80% or more, and
in planar view, an area of the retinal non-convergence area provided in the functional area relative to an area of the entire spectacle lens, is 20 % or less, and
in the functional area, 30 % or more of the light beam entering into the pupil of the wearer is not allowed to converge on the retina, and
in planar view, when the outer clear area is shaped as an aggregate of all circles with a radius r1 [mm] (r1 is any one value in the range of 1.50 or more and 2.50 or less) that can circumscribe the retinal non-convergence area in the functional area without including other retinal non-convergence areas on the outer clear area side, the functional area falls within a circle centered on the eye point and having a diameter that is any one value in a range of 15.0 or more 25.00 or less, and
in planar view, when the central clear area is shaped as an aggregate of all circles with a radius r2 [mm] (r2 is any one value in a range of 1.50 or more and 2.50 or less) that can circumscribe the retinal non-convergence area in the functional area without including other retinal non-convergence areas on the outer clear area side, the central clear area has a size that includes a circle centered on the eye point and having a diameter that is any one value of 4.00 to 13.00 mm, and has a size that falls within a circle with a diameter of other one value within the above range.
